# EUROPEAN PATENT APPLICATION

(11) **EP 1 622 247 A2**
(43) Date of publication of application: **01.02.2006**
(21) Application number: 05107002.7
(22) Date of filing: 28.07.2005
(51) Int. Cl.: H02M 3/28

(54) **Power supply apparatus**

(30) Priority: 29.07.2004 KR 2004059726
(71) Applicant: Samsung Electronics Co, Ltd, Suwon-si, Gyeonggi-do 442-742 (KR)
(72) Inventor: LEE, Jong-woon, Kwonseon-gu, Suwon-si, Gyeonggi-do (KR)
(74) Representative: Geary, Stuart Lloyd

(57) **Abstract**

An electronic apparatus includes a main power supply including a main transformer and a first switching controller that switches an input power supply of the main transformer, and a standby power supply including an auxiliary transformer, a second switching controller that switches an input power supply of the auxiliary transformer, a rectifying circuit that converts an output voltage of the auxiliary transformer into a DC voltage and supplies the DC voltage as a driving power for the first switching controller, a transistor that switches a supply of the driving power from the rectifying circuit to the first switching controller, and a controller that switches the transistor. The electronic apparatus includes a semiconductor device that performs the switching operation with improved stability.

## Description

The invention relates to power supply apparatus comprising: a primary power supply operating under the control of a first controller; and a secondary power supply including an auxiliary transformer.

The invention also relates to a method of operating power supply apparatus including a secondary power supply including an auxiliary transformer, the method comprising operating a first controller to control a primary power supply.

A power stabilisation circuit can be employed as a standby power supply to prevent a main power supply and a system from operating unstably due on an initial provision of external power.

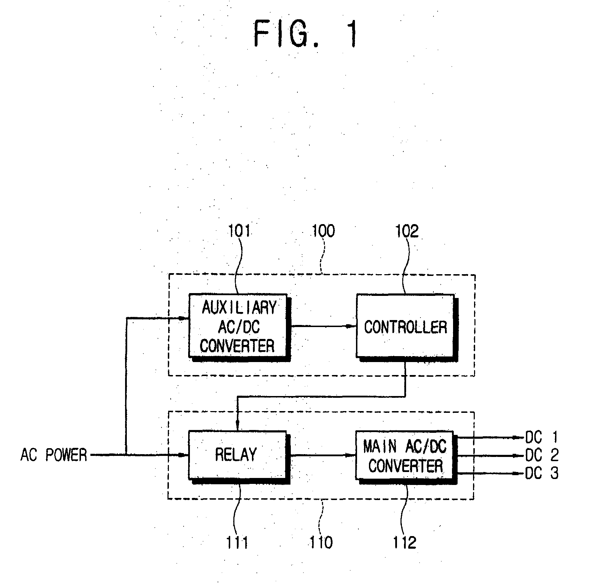

Figure 1 is a schematic block diagram of a conventional power circuit.

As shown in Figure 1, a conventional power circuit comprises a main power supply 110 including a relay 111 and a main AC/DC converter 112; and a standby power supply 100 including an auxiliary AC/DC converter 101 and a controller 102.

The relay 111 of the main power supply 110 is used for switching supply of an external power. The main AC/DC converter 112 converts an AC voltage input through the relay 111 into a DC voltage. The main AC/DC converter may include a rectifying/smoothing circuit, a transformer, a controller switching input voltage of the transformer, etc.

The auxiliary AC/DC converter 101 of the standby power supply 100 converts the AC voltage into a DC voltage to drive the controller 102. Based on the DC voltage, the controller 102 operates the switching of the relay 111.

When external AC power is applied, the auxiliary AC/DC converter 101 outputs the DC voltage to drive the controller 102. Then, the controller 102 turns on the relay 111 to switch the external AC voltage to the main AC/DC converter 112. The main AC/DC converter 112 converts the AC voltage into DC having various voltage levels.

However, in conventional power stabilisation circuits, the relay 111 typically comprises a mechanical contact point, and the mechanical contact point is likely to be worn out due to repetitive mechanical switching. If the contact point is worn out, the relay 111 may operate abnormally. Also, the mechanical contact point of the relay 111 tends to make mechanical noises, such that it may be inconvenient to use a mechanical relay to perform the switching operation.

The apparatus of the invention is characterised in that the secondary power supply comprises a transistor circuit controllable to switch power from the auxiliary transformer to the first switching controller.

The method of the invention is characterised by controlling a transistor circuit of the secondary power supply to switch power from the auxiliary transformer to the first switching controller.

An embodiment of the invention will now be described by way of example with reference to the accompany drawings of which:
Figure 1 is a schematic block diagram of a conventional power circuit;
Figure 2 is a schematic block diagram of a power circuit in accordance with the invention; and
Figure 3 is a circuit diagram of the power circuit of Figure 2.

In the drawings, like reference numerals refer to like elements throughout.

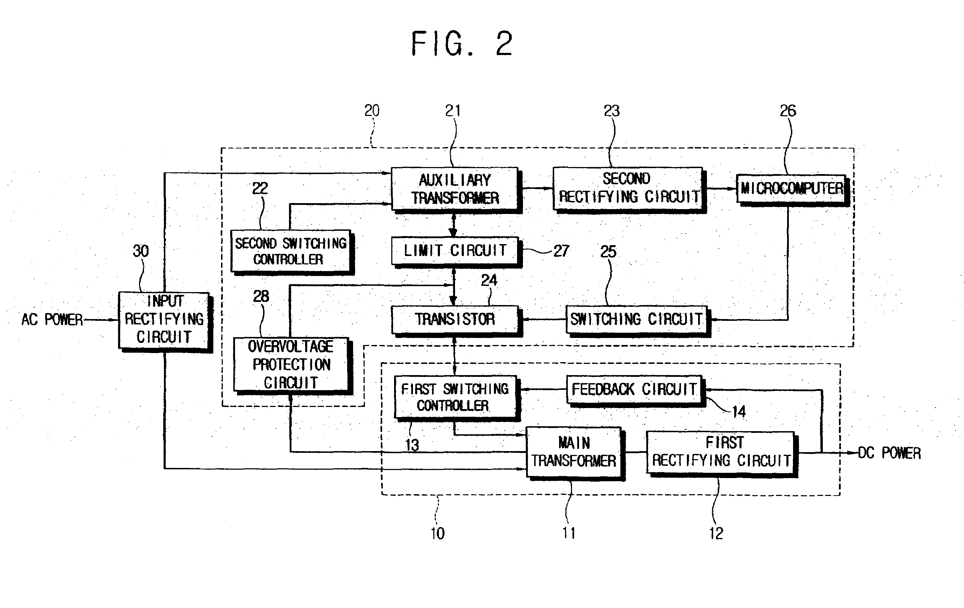

As shown in Figure 2, the power circuit of the electronic apparatus comprises a main power supply 10 that supplies electric power to a system, a standby power supply 20 that supplies a driving power to the main power supply 10, and an input rectifying circuit 30.

The main power supply 10 may comprise a main transformer 11, a first rectifying circuit 12, a first switching controller 13, and a feedback circuit 14.

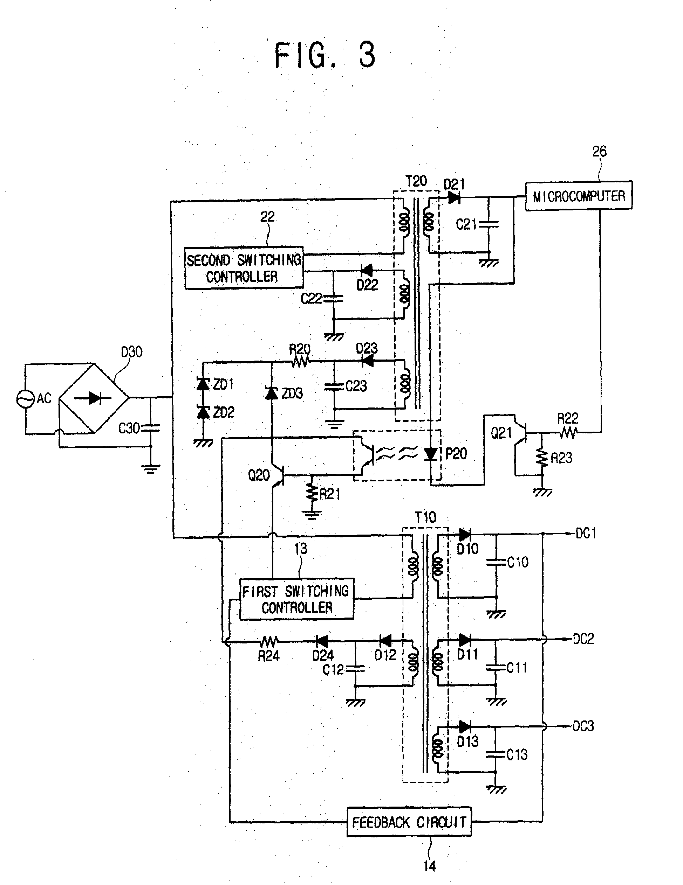

The main transformer 11 transforms an input voltage, and the first rectifying circuit 12 rectifies an output voltage of the main transformer 11. Here, the output voltage is supplied as the electric power that drives the system, wherein the output voltage may be a DC voltage having various voltage levels. Referring to Figure 3, the main transformer 11 (T10) comprises a primary coil and a plurality of secondary coils. The coil ratio is not equal to unity. Output terminals of the secondary coils are connected to the first rectifying circuit 12. Here, the first rectifying circuit 12 comprises a plurality of diodes (D10, D11, and D13) and a plurality of capacitors (C10, C11, and C13).

The first switching controller 13 receives driving power from the standby power supply 20. The first switching controller 13 switches the input voltage supplied to the primary coil of the main transformer 11. That is, the first switching controller 13 opens or closes the power circuit, thereby switching electric current to the primary coil of the main transformer 11. According to this switching operation, a voltage to be induced in the secondary coil is switched based on a DC voltage applied to the primary coil.

The feedback circuit 14 is used to feed back the output voltage of the secondary coil for the system back to the first switching controller 13. The first switching controller 13 controls a duty ratio of a switching signal output to the primary coil of the main transformer 11 based on a level of the voltage fed back by the feedback circuit 14, thereby changing the level of the output voltage for the system.

The standby power supply 20 may comprise an auxiliary transformer 21, a second switching controller 22, a second rectifying circuit 23, a transistor Q20, a switching circuit 25, a microcomputer 26, a limit circuit 27, and an overvoltage protection circuit 28.

The auxiliary transformer 21 (T20) may comprise a primary coil and a plurality of secondary coils different in turn ratio from the primary coil, like the main transformer 11 (T10). The primary coil of the auxiliary transformer 21 (T20) receives a DC voltage from the input rectifying circuit 30 (to be described later), which is connected to a first end of the primary coil, like the primary coil of the main transformer 11 (T10). Here, the DC voltage is switched by the second switching controller 22, which is connected to a second end of the primary coil.

The second switching controller 22 is driven by a voltage from the primary coil of the auxiliary transformer 21, and the second switching controller 22 opens or closes the circuit including an input terminal of the second switching controller 22, thereby switching a flow of an electric current. According to this switching operation, various voltages are induced in the secondary coil of the auxiliary transformer 21, and each induced voltage of the secondary coil is rectified to a DC voltage by the second rectifying circuit 23.

The second rectifying circuit 23 comprises diodes D21, D22, and D23, and capacitors C21, C22, and C23, as shown in Figure 3, but may any other suitable configuration. Voltages across the capacitors C21, C22, and C23 are supplied as a driving power to the microcomputer 26, the second switching controller 22, and the first switching controller 13, respectively.

The transistor 24 (Q20) is used to switching the driving power supplied from the second rectifying circuit 23 to the first switching controller 13.

Referring to Figure 3, the transistor Q20 may be an NPN type bipolar junction transistor, for example. The transistor Q20 has a collector that is connected to the capacitor C23 of the second rectifying circuit 23, and therefore receives the voltage charged in the capacitor C23. An emitter of the transistor Q20 is connected to a driving voltage input terminal of the first switching controller 13.

The transistor Q20 has a base that is biased by the switching circuit 25 and the microcomputer 26. The microcomputer 26 transmits a switching signal to the base of the transistor Q20 through the switching circuit 25. The switching circuit 25 protects the microcomputer 26 by isolating the microcomputer 26 from the transistor Q20, if the switching circuit 25 detects an abnormal electric signal from the transistor Q20. Referring to Figure 3, the switching circuit 25 comprises a photo-coupler P20 comprising a light emitting diode (LED) and a photo-transistor, a transistor Q21, and bias resistors R21, R22, and R23.

The microcomputer 26 receives a driving voltage from the capacitor C21 of the second rectifying circuit 23 and transmits the switching signal to the switching circuit 25. That is, when the microcomputer 26 outputs a high-level signal (switching signal), the transistor Q21 of the switching circuit 25 is turned on, and the LED emits light that turns on the photo-transistor of the photo-coupler P20.

The limit circuit 27 limits a level of a voltage input to the transistor Q20 (i.e., the voltage input to the collector of the transistor Q20) to a voltage level adapted to drive the first switching controller 13. That is, the limit circuit 27 comprises a first limit circuit that keeps the input voltage of the transistor Q20 at (or below) a predetermined upper limit level, and a second limit circuit that diminishes an overshoot voltage level of the input voltage of the transistor Q20. Here, the upper limit level of the input voltage of the transistor Q20 is determined according to a driving power level of the first switching controller 13.

Referring to Figure 3, the limit circuit 27 comprises three Zener diodes ZD1, ZD2, and ZD3. The Zener diodes ZD1 and ZD2, connected to a ground terminal, are used to keep the input voltage of the transistor Q20 constant and prevent the input voltage of the transistor Q20 from increasing when there is no load (i.e., when the transistor Q20 has not been turned on by the switching circuit 25). That is, the input voltage of the transistor Q20 is kept at a sum of the threshold voltages of the Zener diodes ZD1 and ZD2.

The Zener diode ZD3, which is connected to the collector of the transistor Q20 is used to decrease an overvoltage due to an overshoot voltage level of the input voltage of the transistor Q20. That is, the input voltage of the transistor Q20 is decreased by a threshold voltage of the Zener diode ZD3, thereby preventing the first switching controller 13 from an abnormal operation due to the overshoot voltage level of the input voltage of the transistor Q20.

The overvoltage protection circuit 28 feeds back the output voltage of the main power supply 10 from the first rectifying circuit 12. Here, the greater one of the following two voltages: (1) the voltage fed back from the first rectifying circuit 12 to the overvoltage protection circuit 28 and (2) the voltage supplied from the second rectifying circuit 23 is supplied as the driving power to the first switching controller 13. Thus, the overvoltage protection circuit 28 selects the greater one of the two voltages to drive the first switching controller 13, when the transistor Q20 is turned on. Thus, the input terminal of the transistor Q20 and the overvoltage protection circuit 28 are connected.

The first switching controller 13 is driven by an input driving voltage, which is the greater one of the following two voltages including (1) the output voltage of the second rectifying circuit 23 charged on C23 or (2) the output voltage of the first rectifying circuit 12 charged on the capacitor C12. The first switching controller 13 includes a comparator that compares the input driving voltage with a predetermined reference voltage. The predetermined reference voltage may be derived from the feedback circuit 14. Thus, the duty ratio of the switching signal is controlled based on the results of the comparison made by the comparator, thereby controlling the level of the output voltage.

The input rectifying circuit 30 comprises a bridge diode circuit D30 and a capacitor C30 to rectify and smooth an external AC power. The voltage charged in the capacitor C30 is input to both the main power supply 10 and the standby power supply 20.

Hereinbelow, operations of the power circuit shown in Figures 2 and 3 will be described.

When the external AC power is input, the input rectifying circuit 30 rectifies an AC voltage into the DC voltage and supplies the DC voltage to both the primary coil of the auxiliary transformer 21 and the primary coil of the main transformer 11.

The DC voltage that is input to the auxiliary transformer 21 through the primary coil drives the second switching controller 22, and the second switching controller 22 switches the input voltage of the auxiliary transformer 21. According to this switching operation, the voltage is induced in the plurality of secondary coils, and the induced voltage is rectified by the second rectifying circuit 23 into the DC voltage.

The output voltages of the second rectifying circuit 23 are supplied as a driving power to the second switching controller 22, the microcomputer 26, and the first switching controller 13, respectively.

When the microcomputer 26 operates, the high level signal (switching signal) is output and turns on the transistor Q21 of the switching circuit 25 and the photo coupler P20. As a result, the transistor 24 (Q20) is turned on such that the voltage charged in the capacitor C23 of the second rectifying circuit 23 is applied as the input driving voltage to the first switching controller 13.

Before the transistor 24 (Q20) is turned on (i.e., when in no-load state), the voltage charged in the capacitor C23 of the second rectifying circuit 23 is kept by the Zener diodes ZD1 and ZD2 at (or below) the upper limit level. When the transistor 24 (Q20) is turned on, the Zener diode ZD3 decreases a level of an overvoltage charged in the capacitor C23, so that the decreased overvoltage is supplied as the input driving power to the first switching controller 13.

Therefore, the input driving power is stably supplied to the first switching controller 13, and the voltage is induced in the secondary coils of the main transformer 11 according to the switching operations performed by the first switching controller 13. The induced voltages differ according to the turn ratios of the secondary coils. The voltages that are induced in the secondary coils may be rectified into the plurality of DC voltages by the first rectifying circuit 12. The plurality of DC voltages are then supplied to the system.

The feedback circuit 14 feeds back one of the rectified DC voltages of the first rectifying circuit 12 into the first switching controller 13. The first switching controller 13 controls the duty ratio of the switching signal according to the level of the feedback voltage, thereby controlling the level of the output voltage thereof.

Meanwhile, the overvoltage protection circuit 28 feeds back the voltage charged in the capacitor C12 of the first rectifying circuit 12. The voltage fed back from charged capacitor C12 is compared with the voltage input supplied by the second rectifying circuit 23 to the collector of the transistor Q20 by the diode D24 of the overvoltage protection circuit 28. When the voltage fed back from the charged capacitor C12 is greater than the input voltage of the collector of the transistor Q20, the voltage fed back from the charged capacitor C12 is input through the transistor 24 (Q20) into the first switching controller 13. Here, the comparison in the voltage level is controlled by the turn ratio of the secondary coils in the main transformer 11 and the resistor R24.

The first switching controller 13 and the second switching controller 22 can be realised by a micro controller, for example. The micro controller branches the voltage input through the input terminal for the driving power, and uses the branched voltage as the driving power or the input voltage of the comparator. The comparator compares the input voltage with a predetermined reference voltage, thereby controlling the duty ratio of the switching signal. Thus, the circuit device may be protected from trouble due to abnormal operation of the feedback circuit 14.

Thus, the mechanical relay used as the switching device in conventional systems may be replaced by a transistor, thereby preventing the overvoltage due to the no load thereon, and an unstable operation due to the overshoot voltage.

As described above, the embodiment provides an electronic apparatus that comprises a semiconductor device that supplies stable driving power from a main power supply to a system.

It will be appreciated that changes may be made to these embodiments without departing from the principles of the invention, the scope of which is defined in the appended claims.

## Claims

1. Power supply apparatus comprising:
a primary power supply (10) operating under the control of a first controller (13); and
a secondary power supply (20) including a transformer (21),
**characterised in that** the secondary power supply comprises a transistor circuit (24) controllable to switch power from the transformer to the first switching controller.

2. Apparatus as claimed in claim 1, comprising a rectifying circuit (23) for converting an output voltage of the transformer into a DC voltage and for operating with the transistor circuit to supply it to the first switching controller.

3. Apparatus as claimed in claim 1 or claim 2, comprising a circuit unit to adjust the output power of the primary power supply according to a level of the output of the transformer and a protection signal provided by the primary power supply.

4. Apparatus according to any preceding claim, wherein the secondary power supply comprises a first limit circuit that limits a voltage supplied by the rectifying circuit to the transistor circuit.

5. Apparatus according to claim 4, wherein the secondary power supply comprises a second limit circuit for decreasing an overshoot voltage level of the input voltage supplied to the transistor circuit.

6. Apparatus according to any preceding claim, wherein the secondary power supply further comprises an overvoltage protection circuit for feeding-back an output voltage of the main transformer as an input voltage to the transistor circuit.

7. Apparatus according to any preceding claim, wherein the first switching controller controls switch timing with respect to the input power supply of the primary power supply according to a driving voltage supplied by the transistor circuit.

8. Apparatus according to any preceding claim, wherein the transistor circuit comprises a transistor having first terminal connected to the first switching controller, and a second terminal electrically connected to the primary power supply.

9. Apparatus according to any preceding claim, wherein the first switching controller compares a driving voltage that corresponds to the driving power with a predetermined reference voltage to determine a duty ratio for the input power supply of a transformer forming part of the primary power supply, and the predetermined reference voltage is a feedback voltage from an output of the primary power supply.

10. Apparatus according to any preceding claim, wherein the secondary power supply further comprises a controller that controls the transistor circuit to selectively supply the driving power to the first switching controller.

11. Apparatus according to claim 10, wherein the controller utilises a photo-coupler electrically connected to the transistor circuit to control the transistor circuit.

12. A method of operating power supply apparatus including a secondary power supply (20) including an auxiliary transformer (21), the method comprising operating a first controller (13) to control a primary power supply (10),
the method being **characterised by** controlling a transistor circuit (24) of the secondary power supply to switch power from the auxiliary transformer to the first switching controller.

13. An electronic apparatus comprising:
a main power supply comprising a main transformer and a first switching controller that switches an input power supply of the main transformer; and
a standby power supply comprising an auxiliary transformer, a second switching controller that switches an input power supply of the auxiliary transformer, a rectifying circuit that converts an output voltage of the auxiliary transformer into a DC voltage and supplies the DC voltage as a driving power to the first switching controller, a transistor that switches the supply of the driving power from the rectifying circuit to the first switching controller, and a controller that switches the transistor.

14. The electronic apparatus according to claim 13, wherein the standby power supply further comprises a first limit circuit that limits an input voltage to the transistor supplied by the rectifying circuit to a first limit or below.

15. The electronic apparatus according to claim 13 or claim 14, wherein the standby power supply further comprises a second limit circuit that decreases an overshoot voltage level of the input voltage to the transistor supplied by the rectifying circuit.

16. The electronic apparatus according to claim 13, wherein the standby power supply further comprises an overvoltage protection circuit that feeds back an output voltage of the main transformer as an input voltage to the transistor.

17. The electronic apparatus according to claim 16, wherein the first switching controller controls switch timing with respect to the input power supply of the main transformer according to a driving voltage that corresponds to the driving power supplied by the transistor.

18. The electronic apparatus according to claim 17, wherein the first switching controller compares the driving voltage with a predetermined reference voltage level and controls the switch timing according to results of the comparison.

19. The electronic apparatus according to claim 13, wherein the transistor comprises a first terminal electrically connected to the controller, a second terminal electrically connected to the first switching controller, and a third terminal electrically connected to the rectifying circuit and the main transformer.

20. The electronic apparatus according to claim 19, wherein the standby power supply further comprises a limiting circuit connected between the third terminal and the rectifying circuit.

21. The electronic apparatus according to claim 19, wherein the controller comprises a switching circuit that controls the transistor in response to a switching signal received by the controller.

22. The electronic apparatus according to claim 21, wherein the switching circuit comprises a photo-coupler electrically connected to the transistor.

23. The electronic apparatus according to claim 13, wherein the first switching controller compares a driving voltage that corresponds to the driving power with a predetermined reference voltage to determine a duty ratio for the input power supply of the main transformer, and the predetermined reference voltage is a feedback voltage from an output of the main transformer.

24. An electronic apparatus comprising:
a main power supply comprising:
a main transformer, and
a first switching controller that switches an input power supply of the main transformer; and
a standby power supply comprising:
an auxiliary transformer,
a rectifying circuit that converts an output voltage of the auxiliary transformer into
a DC voltage, and
a transistor that receives the DC voltage from the rectifying circuit as an input and switches a supply of a driving power to the first switching controller.

25. The electronic apparatus according to claim 24, wherein the standby power supply further comprises a controller that controls the transistor to selectively supply the driving power to the first switching controller.

26. The electronic apparatus according to claim 24, wherein the standby power supply further comprises a first limiting circuit that limits the DC voltage supplied by the rectifying circuit to the transistor to a reference limit.

27. The electronic apparatus according to claim 26, wherein the first limiting circuit comprises one or more Zener diodes and the DC voltage is limited to a sum of threshold voltages of the one or more Zener diodes.

28. The electronic apparatus according to claim 24, wherein the standby power supply further comprises a second limiting circuit that decreases an overshoot voltage level of the voltage supplied by the rectifying circuit to the transistor.

29. The electronic apparatus according to claim 24, wherein the main transformer comprises another rectifying circuit and the standby power supply further comprises an overvoltage protection circuit that selects a voltage to input to the transistor according to one of: the DC voltage from the rectifying circuit and an output voltage of the another rectifying circuit.

30. The electronic apparatus according to claim 24, wherein the first switching controller regulates the input power supply of the main transformer based on a comparison of the driving power supplied by the transistor and a predetermined reference voltage.

31. The electronic apparatus according to claim 30, wherein the comparison of the driving power supplied by the transistor and the predetermined reference voltage determines a duty ratio of the input power supply of the main transformer.

32. An electronic apparatus, comprising:
a main power supply having a first transformer and a first switching controller, wherein the main power supply generates an output power to be supplied to a system; and
an auxiliary power supply having a second transformer, a transistor to transmit an output of the second transformer to the first switching controller, and a circuit unit to adjust the output of the second transformer according to: a level of the output of the second transformer and a protection signal provided by the first transformer such that the output power is adjusted.

33. A method performed by an electronic apparatus, the method comprising:
receiving an auxiliary input power and transforming the auxiliary input power to an auxiliary output power in a standby power supply;
selectively supplying the auxiliary output power to a main power supply using a transistor such that a main output power is supplied to a system; and
controlling the main output power according to a level of the auxiliary output power and a level of a protection signal generated by the main power supply.
